# EUROPEAN PATENT SPECIFICATION

(11) **EP 0 625 961 B1**
(45) Date of publication and mention of the grant of the patent: **30.09.1998**
(21) Application number: 93914508.2
(22) Date of filing: 01.02.1993
(51) Int. Cl.: C02F 11/12, C02F 3/28, C05F 7/00

(54) **EFFLUENT TREATMENT PROCESS**
VERFAHREN ZUR ABWASSERBEHANDLUNG
PROCEDE DE TRAITEMENT D'EFFLUENTS

(30) Priority: 30.01.1992 GB 9201973; 29.06.1992 GB 9213782
(43) Date of publication of application: 30.11.1994
(73) Proprietor: CHEMRING GROUP PLC, Fareham, Hampshire PO15 7AG (GB)
(72) Inventor: GRANT, Roy Arthur, Parkstone, Poole, Dorset BH14 0PE (GB)
(74) Representative: Wilson, Nicholas Martin
(86) International application number: GB9300211
(87) International publication number: WO9315026

(56) References cited:
- WO-A-81/02888
- DE-A- 3 036 370
- US-A- 5 032 289

## Description

This invention relates to the treatment of effluent waste matter of biological origin: for example sewage, effluent from the dairy industry or forms of previously treated biomass.

Such biomass effluents are conventionally treated by settlement followed by anaerobic digestion of the settled solids fraction to produce a stabilized sludge which is disposed of either by spraying on agricultural land or by dumping at sea. The liquid fraction is then often discharged without further treatment to coastal or estuary waters or, alternatively, receives further aerobic treatment before being discharged to rivers. Such processes result in the production of effluents contaminated both with pathogenic organisms and heavy metals which are undesirable from an environmental point of view. Moreover, legislation is becoming increasingly more restrictive on the dumping of waste material either on land or in the sea. Also, rises in fuel costs and hence transportation costs have led to large increases in disposal costs.

There have been various prior proposals for the treatment of liquid sludges. For example, in European Patent No. 0048723, there is disclosed a method of producing solid material for use as an animal feed, a fish feed or a fertilizer from activated or humus sludge which comprises treating a thickened liquid sludge having a solids content of at least 2% by weight with a base to raise the pH of the sludge to more than 8, acidifying the treated sludge to produce an activated flocculated sludge havipg a pH of 1 to 4, dewatering the acidified flocculated sludge and recovering the resulting solid material. However, such proposals do not result in a product from the original biomass effluent which would be sufficiently rich in nitrogen or low in metals content for some agricultural applications.

So far as industrial effluents are concerned, a high proportion of these, particularly those produced by the food and drinks industries, are characterized by containing large amounts of bio-degradable organic matter. Typical examples of such effluents are those from breweries, farm effluents, slaughterhouses and meat packing wastes, meat and vegetable cannery effluents, palm oil mill wastes and confectionery and sweet manufacturing wastes. Chemical oxygen demand (COD) values in excess of 10,000 are commonly found in such effluents.

Generally, this type of effluent is suitable for treatment by biological systems such as anaerobic digestion and the activated sludge process. Both these processes generate liquid sludges having low solids contents as end products. This is a disadvantage in view of new legislation aimed at protecting the environment which will restrict or prohibit the dumping of liquid sludge on land or at sea or in rivers or lakes.

Moreover, the cost of disposal of liquid sludge has increased because of rises in transport costs. In view of the fact that both digested and activated sludge contain significant amounts of protein and other nutrients, there is the possibility of producing valuable end products if these are recovered in a dry form for use, for example, as fertilizer.

US 5032289 discloses an offshore sewage treatment facility based on a ship in which said sludge from a primary sedimentation tank is combined with a treated solids fraction formed from treatment of the liquid residue from the primary sedimentation tank.

DE 3036370 shows another sewage treatment facility in which once again solids from a primary treatment of the sewage are combined with treated solids from a secondary treatment of the liquid from the primary treatment.

WO81/02888 discloses a method of flocculating dewatered sludge under acidic and alkaline conditions to form a sterile high protein product for use as a fertiliser or animal feed.

An object of the present invention is to provide an effluent treatment system which substantially eliminates liquid sludge disposal and which deals with primary settled solids.

Therefore, according to the present invention, there is provided a process for the treatment of effluent such as untreated biological and industrial effluents and sewage comprising the steps of:
primary treatment of the effluent to produce a solid fraction;
dewatering the solid fraction to produce a liquid fraction; and
secondary treatment of the liquid fraction extracted by dewatering to produce a treated solids fraction;
characterized by thereafter treating the treated solids fraction separately from the solid fraction from primary treatment by the further steps of:
flocculating and further dewatering the treated solids fraction; and,
drying the dewatered treated solids fraction, together with, or separately from, the solid fraction from the primary treatment to produce solid by-products.

In one arrangement where there is a significant insoluble solids fraction, the primary treatment comprises initial settlement to settle out a solids fraction which is then treated in an anaerobic digester prior to dewatering.
Alternatively, the settled solids fraction may be mechanically dewatered.

In a further alternative, where the solids fraction is mainly soluble, settlement may be omitted, and the effluent applied directly to an anaerobic digester.

Preferably the treating of the liquid fraction comprises a process selected from an activated sludge process or a humus sludge process.

The heat required for drying the product may be derived from the bio-gas produced in the anaerobic digestion stage or from incineration of the mechanically dewatered solids fraction.

If heavy metals, but no pathogens are present, the flocculating may be carried out under acidic conditions. The acid filtrate or concentrate from the process is then treated with lime or other alkali to precipitate heavy metals as hydroxides and the acidic dewatered treated solids fraction is neutralized before drying.
Preferably heat is also applied to the acidic flocculated activated fraction to heat coagulate the fraction to facilitate dewatering by filtration or centrifugation.

In accordance with the various aspects of the invention, a distinction can be drawn between effluents containing pathogenic organisms and heavy metals such as are present in some effluents, meat works effluent and pig slurry, and effluents which contain no toxic material such as confectionery or brewery effluent.

Thus, in the case of effluents contaminated with pathogenic organisms or heavy metals, the invention may include flocculating and further dewatering the treated solids fraction first under alkaline and subsequently under acidic conditions and removing a substantial proportion of heavy metals present from the flocculated sludge.

Preferably the solid fraction resulting from alkali treatment is then treated with acid prior to dewatering. The separated digested solids are dried or treated with acid, neutralized and dried either separately or with the dewatered flocculated solids.

It has been found that the temperature at which the acid is added may have a marked effect on the concentration of solids obtained. There appears to be a rise in solid concentration with increasing temperature. Therefore, preferably, the addition of acid is carried out at temperatures in the range of from 20°C to 90°C, and advantageously at 80°C. Such temperatures may also improve filtration rates.

Moreover, the precise pH conditions also appear to be important with some treatments. In particular, a rise in alkaline pH may produce thickening of the biomass. It has been found that alkali should preferably be added in cold ie. ambient conditions.

In a preferred arrangement, alkali is added to cold biomass to a pH 10.7 ± .2 followed by acid addition at 80° to a pH of 1.8 ± .1.

The system is substantially energy self-sufficient and results in solid products free of pathogens and low in metals and environmentally acceptable and useful as organic fertilizers.

Non-toxic effluents may be treated by a variation of the sewage treatment process but which does not involve the use of alkali or mineral acid for sterilization and heavy metal removal.

Thus, the object of this aspect of the invention directed to non-toxic effluents is to provide an effluent treatment system for non-toxic effluents containing organic matter which substantially eliminates liquid sludge disposal and which provides useful by-products and which is substantially energy self-sufficient.

Therefore, according to this aspect of the invention, where the process comprises treating non-toxic effluents containing soluble or insoluble bio-degradable organic matter, the primary treatment is applied either to the whole effluent where the major part of the organic material is in a soluble form, or to a settled solids fraction where the bulk of the organic matter is insoluble in water.

The flocculating and further dewatering preferably comprises the addition of a suitable chemical such as polyelectrolyte followed by belt filtration or equivalent. The heat for drying the digested and treated solids may be obtained from the bio-gas produced in the anaerobic digestion stage.

The system of this aspect of the invention is substantially energy self-sufficient and results in end products essentially safe and environmentally acceptable as organic fertilizers or animal feed components. Heat may also be applied to the flocculated treated solids fraction to facilitate dewatering. The filtrate or centrate from the process may be returned to the plant inlet, the inlet to the activated sludge stage or discharged if the COD is of an appropriate value.

The invention will now be described by way of example with reference to the accompanying figures which are block diagrams of three embodiments of the general process arrangement and in which:

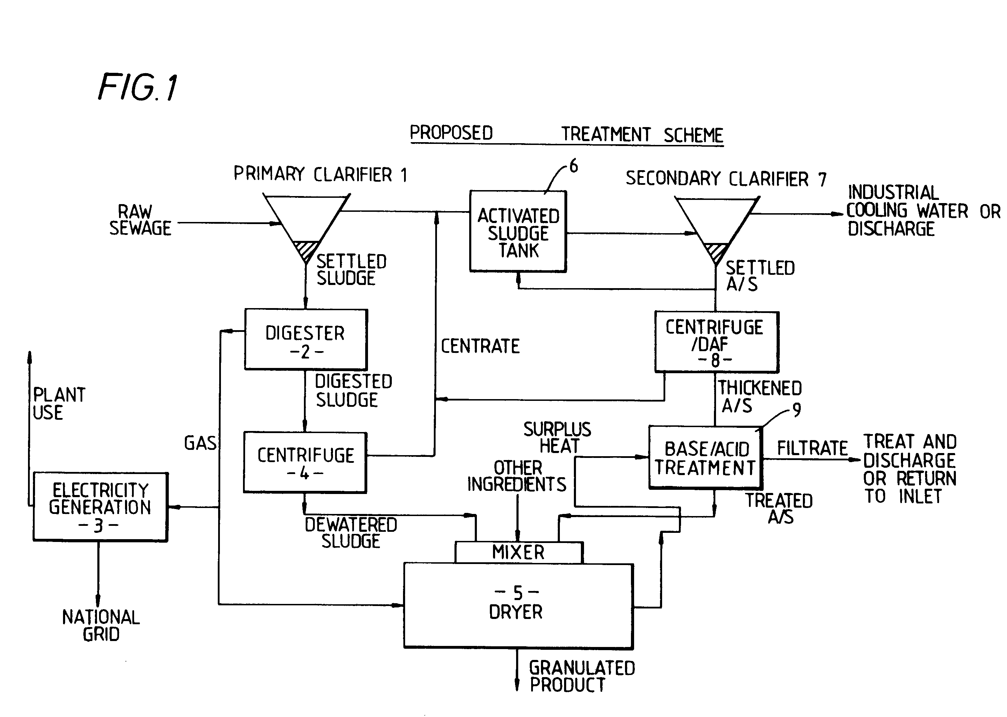

Figure 1 is a first embodiment of an effluent treatment process in accordance with the invention for treatment of biological waste;
Figure 2 is a second embodiment of an effluent treatment process in accordance with the invention for biomass treatment; and,
Figure 3 is a third embodiment of an effluent treatment process in accordance with the invention for the treatment of brewery effluent.

In the first arrangement raw sewage is introduced to a primary clarifier (1) where sludge solids are settled out from a liquid sludge fraction. The sludge solids pass from the primary clarifier (1) to a digester (2) where the sludge solids undergo anaerobic digestion. The products of digestion are digested sludge and bio-gas, mostly methane and carbon monoxide. The bio-gas produced is collected and used as a fuel for electricity power generation at generator (3) for use in the treatment process as will be explained and with excess electricity being available for the National Grid. The digested sludge passes to a centrifuge (4) for dewatering and then introduced to a mixer and dryer apparatus generally indicated (5), the digested sludge may be treated with hot alkali to kill bacteria and viruses, treatment with hot acid to remove metals and then neutralized prior to drying.

The liquid sludge fraction from the primary clarifier (1) and the liquid component or concentrate from the centrifuge (4) is passed to an activated sludge tank (6). At the activated sludge tank the liquid sludge fraction and other components are treated, in known manner, by the growth of micro-organisms under aerated conditions. The resulting activated sludge solids are then passed to a secondary clarifier (7) where the solids are again concentrated by settlement. The settled activated sludge solids are passed to a centrifuge (8) and the clarified-liquid fraction discharged.

At the centrifuge (8) the activated sludge is thickened and removed liquid or concentrate is passed back to the activated sludge tank (6). The thickened activated sludge is then treated by means of the process described in European Patent No. 0048723 generally indicated by block (9). In that process the activated sludge is treated with a base so as to raise the pH to more than 8, then the treated sludge is made to spontaneously flocculate by subsequent addition of acid. The resultant treated sludge may be heat coagulated to facilitate further dewatering by filter press, belt filter or vacuum filter for example. As this aspect is a known process, reference is directed to the disclosure in European Patent No. 0048723 for full details. The acid filtrate is treated with lime, ammonia or other alkali to precipitate heavy metals as hydroxides, the treated filtrate being discharged or returned to the treatment plant inlet. Where the acid filtrate has a high COD value, this may be reduced by adding a compound capable of precipitating organic matter such as lignosulphonic acid and removing the precipitate prior to the addition of lime or by adding a soluble phosphate compound prior to the addition of lime. Alternatively, the neutralized filtrate may be passed through an anaerobic filter. The acidic activated sludge solids may be used to lower the pH value of the separated digested sludge or neutralized before passing to the mixing and drying apparatus (5) where the solids may be mixed with the digested sludge solids and dried. The material may also be mixed with other ingredients such as maize and vitamins or phosphate and potash compounds for example, then dried and granulated to produce a granulated commercial product useful as a feed or fertilizer.

Instead of a centrifuge (8) a dissolved air flotation (DAF) plant may be used to remove liquid from the activated sludge.

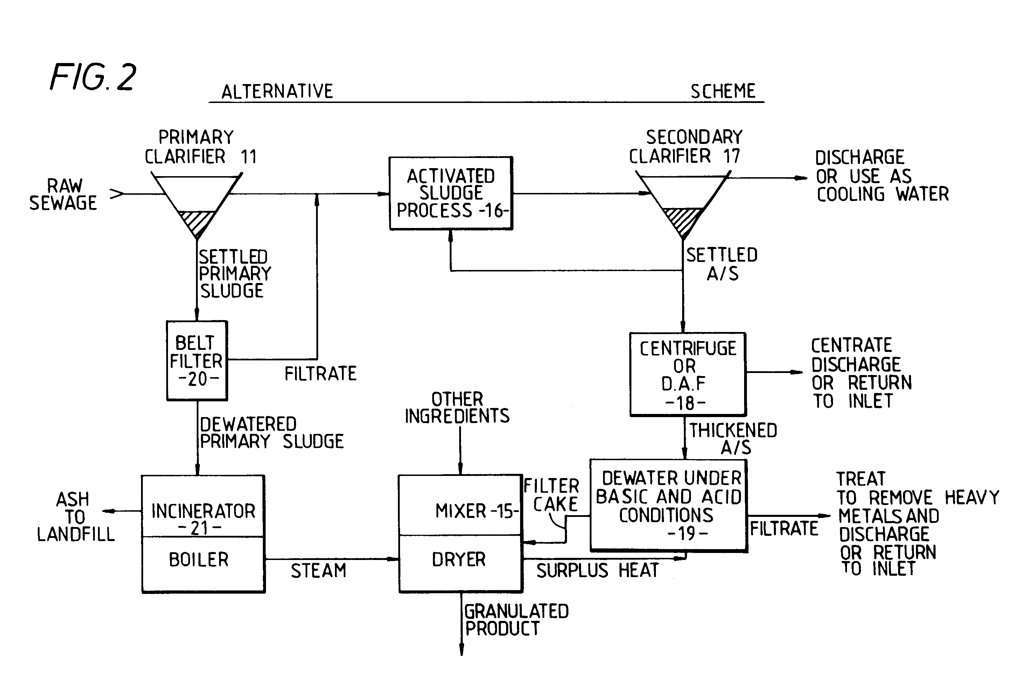

In the alternative arrangement in Figure 2, where the same numbering in a series commencing with 10 has been used for corresponding parts, settled primary sludge from the primary clarifier (11) is dewatered by a mechanical belt filter (20) with the liquid raw biomass fraction and the liquid from the dewatering passing to the activated sludge tank (16). The dewatered primary sewage solids are then incinerated at (21) to Provide heat for drying and the ash is disposed of by landfill.

The remainder of the process works as described above in respect of the first arrangement, ie. flocculating and dewatering the thickened activated sludge under hot alkaline conditions to kill bacteria and hot acidic conditions to remove heavy metals followed by neutralization and drying.

Although it is preferred to incorporate an activated sludge process, the alternative is to produce a humus sludge by percolating the liquid fractions through a filter bed in which micro-organisms grow under aerobic conditions.
Optionally, a reducing or oxidizing agent and/or chelating agent may be added to the acidified treated sludge to facilitate the removal of heavy metals and the inactivation of bacteria and viruses. Also, although it is preferred to incorporate the process disclosed in European Patent No. 0048723 the thickened activated sludge may, in the alternative, be simply dewatered under acidic conditions.

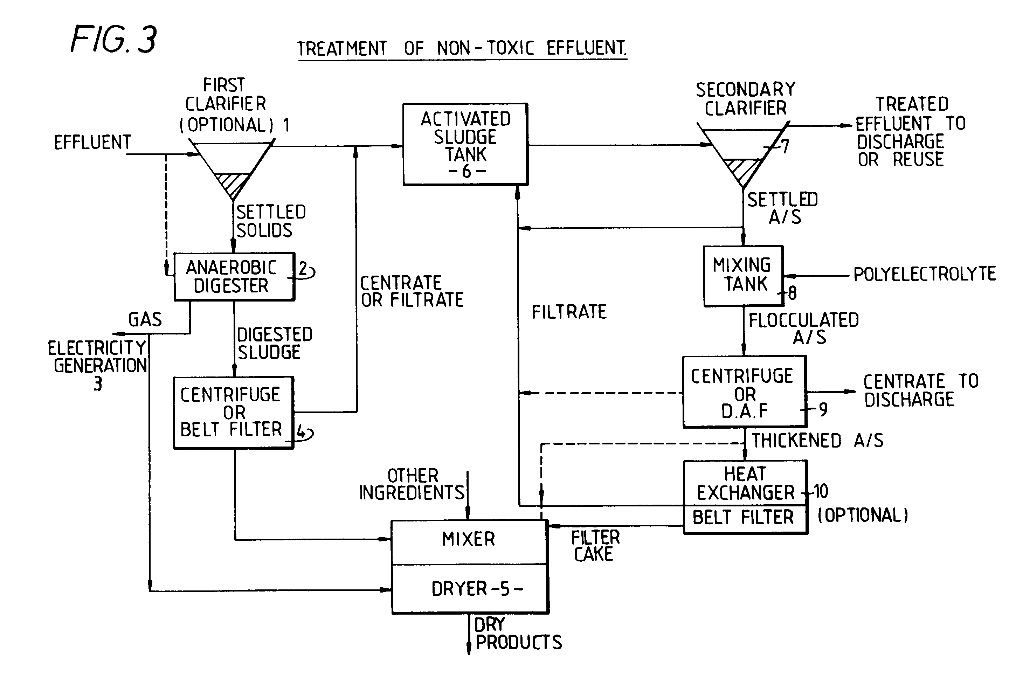

In Figure 3 where virtually all the COD load is in soluble form, a clarifier (1) is optional and may be omitted where there is no significant amount of insoluble solids. In the drawing, brewery effluent is introduced directly into an anaerobic digester (2) where it undergoes anaerobic digestion for a pre-determined length of time. The products of the digestion are a digested sludge and bio-gas, mostly methane and carbon monoxide. The bio-gas is collected and used partly for electricity generation (3) for use in the plant or sale to the National Grid and partly for drying the dewatered sludge as will be explained. The digested sludge contains a liquid fraction and a solids fraction and is passed from the digester (2) to a centrifuge (4) for dewatering. The dewatered solids fraction is passed to a mixing and drying apparatus generally indicated (5).

The liquid fraction from the centrifuge (4) is passed to an activated sludge tank (6) where the liquid fraction is treated in known manner by the growth of micro-organisms under aerated conditions and the resulting activated sludge solids are passed to a secondary clarifier (7) where the solids are again concentrated by settlement.

The settled activated sludge solids are then passed to a mixing tank (8) and mixed with a suitable polyelectrolyte or other chemical to induce flocculation of the activated sludge solids. The treated sludge is then thickened in a centrifuge or DAF plant (9). The concentrate is discharged or returned to the activated sludge tank (6). The thickened sludge from the centrifuge or DAF plant (9) may be passed directly to the mixing and drying plant (5), or optionally it may be further dewatered by heat treatment and belt filtration (10). In the mixing and drying plant (5) it may be mixed with digested sludge solids and/or other ingredients, and dried by means of the bio-gas energy source produced in the anaerobic digestion stage.

The drying plant (5) produces a granulated product suitable for use as an organic fertilizer or an animal feed component.

Preferably the process is operated as a continuous flow system using stirred tank reactors for example for the introduction of acid or alkali or other chemicals. Optionally, the stirred tank reactors are provided with heating elements or coils for temperature optimization.

There now follows a specific example of effluent treatment as applied to the treatment of sewage:

### EXAMPLE

Untreated biological effluent in substantial quantity was subjected to primary settlement in a clarifier and the settled sludge with an average solids content of 4% was treated in an anaerobic digester with a retention time of 12 days. The bio-gas produced in the digester was used partly for the generation of electricity and partly as a source of heat.

Digested sludge was then centrifuged to give a dewatered sludge containing 30-35% dry solids. The dewatered digested sludge was passed to a dryer operating at 110°C to yield a dry product having a mean nitrogen content of 3% and a phosphorus content of 3.5% (as P₂O₅). The cadmium content of the dry product was 3mg/kg well below the agricultural maximum limit of 20mg/kg. The dry product is useful as a general purpose fertilizer.

The liquid fraction from the dewatered digested sludge was treated by the activated sludge process. The activated sludge solids were then separated in a secondary clarifier and the clarified treated effluent was discharged to the sea.

The surplus settled activated sludge fraction with a dry solid content of approximately 0.5% was thickened in a dissolved air flotation plant (8) to yield a thickened sludge with a solids content of 4-5%. In accordance with European Patent No. 0048723 the pH of the thickened activated sludge was raised to 11.5 by addition of sodium hydroxide solution (40% w/v) with stirring and the alkaline sludge allowed to stand for 2 hours at ambient temperature. The pH of the sludge was then reduced to 2.2 by the addition of sulphuric acid (75% w/v) and the acidified flocculated sludge allowed to stand overnight before being dewatered in a filter press. The resulting filter cake (25% dry solids) was removed from the filter press and neutralized with ammonia solution (0.88 S.G.) in a Z blade mixer and finally passed to the dryer where it was dried at a temperature of 110°c.

The dry product had a mean nitrogen content of 10.5%, a phosphorus content of 3.4% (as P₂O₅ ) and a cadmium content of 0.5mg/kg. Extensive field trials on a variety of crops showed that the product was very similar to dried blood in its effect on plant growth and crop yield.

## Claims

1. A process for the treatment of effluent such as untreated biological and industrial effluents and sewage comprising the steps of:
primary treatment of the effluent to produce a solid fraction;
dewatering the solid fraction to produce a liquid fraction; and
secondary treatment of the liquid fraction extracted by dewatering to produce a treated solids fraction;
characterized by thereafter treating the treated solids fraction separately from the solid fraction from primary treatment by the further steps of:
flocculating and further dewatering the treated solids fraction; and,
drying the dewatered treated solids fraction, together with, or separately from, the solid fraction from the primary treatment to produce solid by-products.

2. A process according to claim 1, wherein the primary treatment comprises initial settlement to settle out a solids fraction which is then treated in an anaerobic digester prior to dewatering.

3. A process according to claim 1, wherein the primary treatment comprises initial settlement to settle out a solids fraction followed by mechanically dewatering.

4. A process according to claim 1, wherein the primary treatment comprises anaerobic digestion prior to dewatering.

5. A process according to any one of the preceding claims, wherein secondary treatment of the liquid fraction comprises a process selected from an activated sludge process or a humus sludge process.

6. A process according to claim 2 or 4, wherein heat required for drying the product is derived from bio-gas produced in the anaerobic digestion stage.

7. A process according to claim 3, wherein the mechanically dewatered solids fraction is incinerated to provide heat for the drying step.

8. A process according to any of the preceding claims, comprising flocculating the treated solids fraction under acidic conditions where heavy metals are present.

9. A process according to any of the preceding claims comprising flocculating and dewatering the treated solids fraction first under alkaline and subsequently under acidic conditions.

10. A process according to claim 9, wherein the acid treatment is carried out at a temperature in the range of 20°C to 90°C.

11. A process according to claim 9, wherein the alkali treatment is carried out at ambient temperature.

12. A process according to any one of claims 9 to 11, wherein alkali is added to biomass at ambient temperature to a pH of 10.7 ± .2 followed by acid addition at about 80°C to a pH of 1.8 ± .1.

13. A process according to claim 8, comprising treating the filtrate or concentrate from the dewatered treated solids fraction with alkali to precipitate heavy metals as hydroxides and neutralizing the acidic dewatered treated solids fraction before drying.

14. A process according to claim 1 for treating effluent comprising non-toxic effluents containing soluble or insoluble bio-degradable organic matter, wherein the primary treatment is applied to the whole effluent where the major part of the organic material is in a soluble form, or to a settled solids fraction where the major part of the organic matter is insoluble in water.

15. A process according to claim 14, wherein the steps of flocculating and further dewatering comprises the addition of a polyelectrolyte followed by belt filtration.

16. A process according to claim 1, wherein the effluent comprises sewage wherein:
the primary treatment comprises primary settlement of the sewage solids to produce the solid fraction in the form of settled sludge and a liquid sludge fraction;
the separate secondary treatment of the liquid fraction comprises treating the liquid sludge fraction and the liquid sludge fraction extracted by dewatering the settled sludge by a process selected from an activated sludge process, a humus sludge process to produce the treated solids fraction;
the flocculating and further dewatering of the treated solids fraction is conducted under alkaline and acidic conditions thereby removing a substantial proportion of heavy metals present from the flocculated sludge; and,
the drying step produces a material suitable for use as an organic fertilizer.

17. A process according to claim 16, wherein the settled sludge is treated in a digester prior to dewatering, the separated digested solids are dried or treated with acid, neutralized and dried either separately or with the dewatered flocculated solids.

18. A process according to claims 16 or 17, wherein the alkali is added to the treated solids fraction at ambient temperature to a pH of 10.7 ± .2 followed by acid addition at about 80°C to a pH of 1.8 ± .1.

## Patentansprüche

1. Ein Verfahren zur Behandlung von Abfluß, zum Beispiel unbehandelten biologischen und industriellen Abflüssen und Abwässern, wobei das Verfahren die folgenden Schritte aufweist:
primäres Behandeln des Abflusses, um eine Festsubstanzfraktion zu erzeugen;
Entwässern der Festsubstanzfraktion, um eine flüssige Fraktion zu erzeugen; und
sekundäres Behandeln der flüssigen Fraktion, welche durch Entwässern extrahiert worden ist, um eine behandelte Festsubstanzfraktion zu erzeugen;
**gekennzeichnet durch** anschließendes Behandeln der behandelten Festsubstanzfraktion separat von der Festsubstanzfraktion aus der primären Behandlung, durch die folgenden weiteren Schritte:
Ausflocken und weiteres Entwässern der behandelten Festsubstanzfraktion; und
Trocknen der entwässerten behandelten Festsubstanzfraktion zusammen mit oder getrennt von der Festsubstanzfraktion aus der primären Behandlung, um feste Nebenprodukte zu erzeugen.

2. Ein Verfahren nach Anspruch 1, bei welchem die primäre Behandlung ein anfängliches Sedimentieren aufweist, um eine Festsubstanzfraktion zu sedimentieren, welche sodann in einem anaeroben Digestor vor dem Entwässern behandelt wird.

3. Ein Verfahren nach Anspruch 1, bei welchem die primäre Behandlung ein anfängliches Sedimentieren aufweist, um eine Festsubstanzfraktion zu sedimentieren, gefolgt durch ein mechanisches Entwässern.

4. Ein Verfahren nach Anspruch 1, bei welchem die primäre Behandlung eine anaerobe Digestion vor dem Entwässern aufweist.

5. Ein Verfahren nach einem der vorhergehenden Ansprüche, bei welchem die sekundäre Behandlung der flüssigen Fraktion einen Prozeß aufweist, welcher aus einem Aktivierschlammprozeß oder einem Humusschlammprozeß ausgewählt ist.

6. Ein Verfahren nach Anspruch 2 oder 4, bei welchem die zum Trocknen des Produkts erforderliche Wärme aus Biogas abgeleitet wird, das in der anaeroben Digestionsstufe erzeugt wird.

7. Ein Verfahren nach Anspruch 3, bei welchem die mechanisch entwässerte Festsubstanzfraktion verascht wird, um die Wärme für den Trocknungsschritt zu erzeugen.

8. Ein Verfahren nach einem der vorhergehenden Ansprüche, welches Aus flocken der behandelten Festsubstanzfraktion unter säurebildenden Bedingungen aufweist, bei denen Schwermetalle vorhanden sind.

9. Ein Verfahren nach einem der vorhergehenden Ansprüche, welches Ausflocken und Entwässern der behandelten Festsubstanzfraktion zuerst unter alkalischen Bedingungen und darauffolgend unter säurebildenden Bedingungen aufweist.

10. Ein Verfahren nach Anspruch 9, bei welchem die saure Behandlung bei einer Temperatur in dem Bereich von 20°C bis 90°C ausgeführt wird.

11. Ein Verfahren nach Anspruch 9, bei welchem die alkalische Behandlung bei Umgebungstemperatur ausgeführt wird.

12. Ein Verfahren nach einem der Ansprüche 9 bis 11, bei welchem Alkali zu der Biomasse bei Umgebungstemperatur bis zu einem pH von 10,7 ± 0,2 hinzugefügt wird, gefolgt durch eine Säurezugabe bei etwa 80°C bis zu einem pH von 1,8 ± 0,1.

13. Ein Verfahren nach Anspruch 8, welches ein Behandeln des Filtrats oder des Konzentrats von der entwässerten, behandelten Festsubstanzfraktion mit Alkali, um Schwermetalle als Hydroxide auszufällen, und Neutralisieren der säurebildenden, entwässerten, behandelten Festsubstanzfraktion vor dem Trocknen aufweist.

14. Ein Verfahren nach Anspruch 1 zum Behandeln von Abfluß, welcher nicht-toxische Abflüsse aufweist, welche lösliches oder nicht-lösliches, biologisch abbaubares, organisches Material enthalten, wobei die primäre Behandlung auf den gesamten Abfluß angewendet wird, wo der Hauptteil des organischen Materials in einer löslichen Form ist, oder auf eine sedimentierte Festsubstanzfraktion angewendet wird, wo der Hauptteil des organischen Materials in Wasser unlöslich ist.

15. Ein Verfahren nach Anspruch 14, bei welchem die Schritte des Ausflockens und des weiteren Entwässerns die Hinzugabe eines Polyelektrolyten aufweisen, gefolgt durch eine Bandfiltration.

16. Ein Verfahren nach Anspruch 1, bei welchem der Abfluß Abwässer aufweist, wobei:
die primäre Behandlung ein primäres Sedimentieren der Abwässerfestsubstanzen aufweist, um die Festsubstanzfraktion in der Form des sedimentierten Schlammes und eine Flüssigschlammfraktion zu erzeugen;
die separate sekundäre Behandlung der flüssigen Fraktion ein Behandeln der Flüssigschlammfraktion und der Flüssigschlammfraktion, die durch Entwässern des sedimentierten Schlammes extrahiert worden ist, durch einen Prozeß aufweist, welcher aus einem Aktivierschlammprozeß oder einem Humusschlammprozeß ausgewählt wird, um die behandelte Festsubstanzfraktion zu erzeugen;
das Ausflocken und das weitere Entwässern der behandelten Festsubstanzfraktion unter alkalischen und säurebildenden Bedingungen ausgeführt wird, um hierdurch einen wesentlichen Anteil von Schwermetallen zu entfernen, welche von dem ausgeflockten Schlamm vorhanden sind; und
der Trocknungsschritt ein Material erzeugt, das zur Verwendung als ein organisches Düngemittel geeignet ist.

17. Ein Verfahren nach Anspruch 16, in welchem der sedimentierte Schlamm in einem Digestor vor dem Entwässern behandelt wird und die separierten, digestierten Festsubstanzen getrocknet werden oder mit Säure behandelt, neutralisiert und entweder separat oder mit den entwässerten, ausgeflockten Festsubstanzen getrocknet werden.

18. Ein Verfahren nach Anspruch 16 oder 17, bei welchem das Alkali der behandelten Festsubstanzfraktion bei Umgebungstemperatur bis zu einem pH von 10,7 ± 0,2 hinzugefügt wird, gefolgt durch Säurezugabe bei etwa 80°C bis zu einem pH von 1,8 ± 0,1.

## Revendications

1. Procédé pour le traitement d'effluent, tel que des effluents industriels et biologiques non traités et eaux usées comprenant les étapes consistant à :
traitement primaire de l'effluent pour produire une fraction solide ;
égouttage de la fraction solide pour produire une fraction liquide ; et
traitement secondaire de la fraction liquide extraite par égouttage pour produire une fraction de matières solides traitée ;
caractérisé par le traitement ultérieur de la fraction de matières solides traitée séparément de la fraction solide du traitement primaire par les étapes suivantes :
floculation et égouttage supplémentaire de la fraction de matières solides traitée ; et
séchage de la fraction de matières solides traitée égouttée conjointement avec, ou séparément de, la fraction solide du traitement primaire pour obtenir des sous-produits solides.

2. Procédé selon la revendication 1, dans lequel le traitement primaire comprend le dépôt initial consistant à séparer par dépôt une fraction de matières solides qui est ensuite traitée dans un digesteur anaérobie avant l'égouttage.

3. Procédé selon la revendication 1, dans lequel le traitement primaire comprend le dépôt initial pour séparer par dépôt une fraction de matières solides suivi de l'égouttage mécanique.

4. Procédé selon la revendication 1, dans lequel le traitement primaire comprend la digestion anaérobie avant l'égouttage.

5. Procédé selon l'une quelconque des revendications précédentes, dans lequel le traitement secondaire de la fraction liquide comprend un procédé choisi à partir d'un procédé de boue activée ou d'un procédé de boue colloïdale.

6. Procédé selon la revendication 2 ou 4, dans lequel la chaleur nécessaire pour sécher le produit est dérivée du biogaz produit dans l'étape de digestion anaérobie.

7. Procédé selon la revendication 3, dans lequel la fraction de matières solides égouttée mécaniquement est incinérée pour fournir de la chaleur pour l'étape de séchage.

8. Procédé selon l'une quelconque des revendications précédentes, comprenant la floculation de la fraction de matières solides traitée dans des conditions acides dans lesquelles sont présents des métaux lourds.

9. Procédé selon l'une quelconque des revendications précédentes, comprenant la floculation et l'égouttage de la fraction de matières solides traitée tout d'abord dans des conditions alcalines et ensuite dans des conditions acides.

10. Procédé selon la revendication 9, dans lequel le traitement acide est effectué à une température dans la plage de 20 à 90°C.

11. Procédé selon la revendication 9, dans lequel le traitement alcalin est effectué à une température ambiante.

12. Procédé selon l'une quelconque des revendications 9 à 11, dans lequel l'alcali est ajouté à la biomasse à une température ambiante jusqu'à un pH de 10,7 ± 0,2 suivi de l'addition acide à environ 80°C à un pH de 1,8 ± 0,1.

13. Procédé selon la revendication 8, comprenant le traitement du filtrat ou du concentré provenant de la fraction de matières solides traitée égouttée avec l'alcali pour précipiter les métaux lourds en tant qu'hydroxydes et neutralisation de la fraction de matières solides traitée égouttée acide avant séchage.

14. Procédé selon la revendication 1, pour le traitement d'effluent comprenant des effluents non toxiques contenant des matières organiques biodégradables solubles ou insolubles, dans lequel le traitement primaire est appliqué à l'effluent total avec la majeure partie du matériau organique dans une forme soluble ou à une fraction de matières solides déposée où la plus grande partie de la matière organique est insoluble dans l'eau.

15. Procédé selon la revendication 14, dans lequel les étapes de floculation et d'égouttage supplémentaire comprennent l'addition d'un polyélectrolyte suivie d'une filtration par bande.

16. Procédé selon la revendication 1, dans lequel l'effluent comprend des eaux usées, dans lequel :
le traitement primaire comprend le dépôt primaire des solides d'eaux usées pour produire la fraction solide sous forme de boue déposée et une fraction de boue liquide;
le traitement secondaire séparé de la fraction liquide comprend le traitement de la fraction de boue liquide et la fraction de boue liquide extraite par égouttage de la boue déposée par un procédé choisi à partir d'un procédé de boue activée, un procédé de boue colloïdale pour produire la fraction de matières solides traitée ;
la floculation et l'égouttage supplémentaire de la fraction da matières solides traitée est conduite dans des conditions alcalines et acides permettant ainsi d'enlever une proportion sensible de métaux lourds présents dans la boue floculée ; et
l'étape de séchage produit un matériau apte à l'utilisation comme engrais organique.

17. Procédé selon la revendication 16, dans lequel la boue déposée est traitée dans un digesteur avant l'égouttage, les matières solides digérées séparées sont séchées ou traitées avec de l'acide, neutralisées et séchées soit séparément soit avec les matières solides floculées égouttées.

18. Procédé selon la revendication 16 ou 17, dans lequel on ajoute de l'alcali à la fraction de matières solides traitée à la température ambiante jusqu'à un pH de 10,7 ± 0,2 suivi de l'addition acide à environ 80°C jusqu'à un pH de 1,8 ± 0,1.
